# EUROPEAN PATENT APPLICATION

(11) **EP 1 352 699 A1**
(43) Date of publication of application: **15.10.2003**
(21) Application number: 02076384.3
(22) Date of filing: 09.04.2002
(51) Int. Cl.: B23K 9/20

(54) **A method of attaching a sheet panel to a metal structure and a stud welding system for this**

(71) Applicant: Rockwool International A/S, 2640 Hedehusene (DK)
(72) Inventor: Pedersen, Kurt Munk, 4140 Borup (DK)
(74) Representative: Elmeros, Claus

(57) **Abstract**

The invention concerns a method of attaching a sheet panel (1) onto a metal structure (2) by placing a number of studs (3) through the sheet material and welding said studs onto the metal structure by using a stud-welding system in which the stud is positioned in a stud-welding gun (4) and where the stud is rotated while substantially simultaneously being forced onto the metal structure before the discharge of the welding current. Furthermore, the invention relates to a stud and a welding gun adapted for use by such method.

## Description

The present invention relates to a method of attaching a sheet panel onto a metal structure by placing a number of studs through the sheet material and welding said studs onto the metal structure by using a stud-welding system, a stud for use by attaching a sheet panel onto a metal structure comprising a head with a protruding pin member and a stud welding gun for welding on studs comprising spring-loaded stud holding means for receiving a stud and pinching this stud through a sheet panel and forcing the stud towards an underlying metal structure.

In steel structures covering panels of fibrous insulation material may often be fitted in order to provide fire, thermal and/or noise insulation, e.g. of steel structures in building constructions, metallic ventilation ducts, steel chimneys/stacks, pipes or metal structures for maritime purposes. This insulation is often required in order to provide an effective fire protection.

In order to fit an insulating layer to a metal structure, typically a steel structure, it is known to weld on a number of needle pins onto the steel surface. On these needles, panels of fibrous insulation material are mounted. When the panels are mounted, the needles are pinched through the panel and a locking disc is secured to the ends of the pins, which protrude through the fibrous insulation panels. In order to ensure that the insulation panels are properly secured, the needle pins must be positioned relatively close.

This method of mounting the insulation layer is extremely time-consuming, due to the excessive amount of needle pins, which must be secured to the steel structure. For the personnel fitting the insulation panels, there is a risk of being injured on the protruding needle pins or spikes. Moreover, the panels must be mounted with tremendous precision since they cannot be moved sideways once they have been pressed onto the needles. It is of utmost importance that the panels must be closely fitted to each other. This means that there is a risk that a considerable amount of insulation panels must be ejected and remounted/refitted if they have not been properly mounted in the first attempt. Moreover, this method makes it difficult - if not impossible - to fit a fire insulation onto surfaces in a confined space.

Another method of attaching fire insulation to a steel structure is to use welding studs pinched through an insulation panel, which are fitted to the surface of the structure, and then welded to the structure by use of a welding gun. By this method, it is possible to position the attachments in relation to the assembling joints of the fibrous insulation panels. The mounting of the insulating panels is also easier and the danger of being injured on the needles is eliminated.

The studs are pinched through the insulation panels or layers and into contact with the underlying steel surface at desired positions, i.e. away from the joining lines between the panels. Thereby, the amount of attachment points may be reduced and the mounting is easier and less time-consuming. This method is also applicable to rolls of insulation material.

However, this method is significantly less applicable to non-conducting, corrosion protected surfaces, such as painted surfaces, since the welding must burn away the paint before a metallic contact between the steel and the stud can be established. The welding attachment may be of a poor quality due to residues in the welding areas, since the worker needs to remove the paint prior to performing the welding operation. Furthermore, the corrosion protective layer cannot be re-established if it is damaged. The method demands a great power from the worker in order to shoot the studs into the panel and they may fall out or become damaged during the penetration due to the high resistance.

Such working procedures are costly, in particularly in maritime applications where up to 80% of the costs for mounting the insulation are labour related costs.

In summary, in the known method, any paint or rust scales must initially be removed, e.g. by grinding, before the welding can take place. This results in inaccuracies since many areas are left exposed without any protection against corrosion.

In this light, it is an object of the present invention to provide a method and a stud welding system, which allows for a better attachment of insulating panels onto a metal structure and to ensure a proper metallic contact for the welding process. Moreover, it is an object of the invention to provide a method and a system, which is less labour intensive and thus allows for a more cost effective way of attaching insulating panels.

The object is achieved by a method of attaching a sheet panel onto a metal structure by placing a number of studs through the sheet material and welding said studs onto the metal structure by using a stud-welding system in which the stud is positioned in a stud-welding gun where the stud is rotated whilst being forced onto the metal structure before the discharge of the welding current.

By rotating the stud as it is forced towards the metal structure, a drilling effect is created and a coating layer will be removed or at least distorted to a sufficient degree such that a secure stud welding process may be performed. The rotation may be an angular displacement from a few degrees up to several revolutions.

According to the invention, the attachment of panels may be carried out in a single operation and with a better precision, since the panels may be placed in position before the attachment points are established. By the hitherto known techniques, the spikes must be welded onto the exposed surface before the panels are pressed into position. Moreover, by the method according to the invention, there are no exposed areas on the steel surface.

This method is advantageous for attachment of fibrous insulation to steel constructions in maritime insulation and fire insulation of steel columns and girders.

The method is also advantageous in that insulation panels in certain occasions may be attached to confined spaces of a steel structure since a considerably smaller amount of space is required for performing the attachment.

As an alternative to the welding technique applied by the invention, a friction welding could be used if special conditions should favour this welding technique.

By the invention, the sheet material is preferably a fibrous insulation sheet material. However, it is realised that the method may also be applied in relation to the attachment of other types of panels, such as for instance calcium silicate boards, gypsum boards or cementious boards. The panels are usually stiff, but soft materials may also be used as panels, e.g. rolls, batts, foam panels or other sound or vibration absorption panels.

In the preferred embodiment of the invention, the metal structure is a steel structure. However, the method may also be applied in connection with other metal structures such as e.g. aluminium structures.

Preferably, the stud is rotated simultaneously with the action of being forced towards the metal structure. Hereby, the biasing and the rotation may be performed in a single combined movement.

The method is preferably applied in connection with a coated steel structure, e.g. with a corrosion resistant coating in order to remove the coating. However, it is realised that the method according to the invention may also be advantageously used for uncoated structures for removing impurities on the surface at the point of welding. Otherwise, impurities, such as scaling, heat residues etc., must be removed before the welding process, which is very time consuming. The structures may be coated with plastic coatings, paint or any other suitable protective coating.

The invention also relates to a fibrous insulation layer comprising one or more fibrous panels mounted on a steel structure by stud welding using a method, wherein the insulation layer is made up by a number of panels independently secured by one or more studs to the steel structure, wherein the fibrous insulation panel or panels are attached by using the method according to the above-described first aspect of the invention.

The invention also relates to a stud welding system comprising a stud for use by attaching a sheet panel onto a metal structure comprising a head, preferably a disc-shaped head, with a protruding pin member, wherein said pin member is provided with top layer removing means at its free end. In the present context, the top layer corresponds to the corrosion protective layer or coating, e.g. paint.

The stud according to this aspect of the invention is thus adapted for use by a method according to the above-described first aspect of the invention.

The top layer removing means may preferably be a drilling head formed in the pin end or other scraping means on the end of the stud. Hereby, a metallic contact may be obtained by removing the top layer of a metal structure behind the fibrous material.

In order to ensure a firm grip on the head of the stud so that the stud is rotated and does not slide inside the welding gun, the head is preferably provided with a non-rotary symmetric shape. Alternatively or as a supplement, the disk-shaped head may be provided with indexing means, such as one or more indentations on the outer rim of the head. The indentations may also be provided in the interior of the head.

In a preferred embodiment, the pin is provided with a zinc deposit adjacent the cutting means at the end of the stud. Hereby, a corrosion resistant coating may be reapplied as the zinc deposit will set as a "sacrificial anode" and thereby protect the distorted area around the pin.

In a preferred embodiment, the pin and/or the underside of the head is provided with an electrically insulating sleeve. This is advantageous if the insulating panels are provided with a top layer of aluminium foil in order to isolate the aluminium foil from the welding process.

According to another aspect of the invention, the invention comprises a stud welding gun for welding on studs comprising spring-loaded stud holding means for receiving a stud which is being pinched through a sheet panel and forcing the stud towards an underlying metal structure, wherein said stud receiving means are provided with rotating means for rotating the stud along its pin axis, when the stud is forced into contact with the metal structure. This stud welding gun is adapted for use in performing a method according to the first aspect of the invention.

The receiving means are preferably provided with an inner shape, which correspond to the non-rotary symmetric shape of the head of the stud to be received therein. The inner shape of the receiving means may also be provided with protrusions corresponding to indentations on the head of the stud. When the receiving means are provided with a shape corresponding to the stud, it is ensured that the rotation of the receiving means is transferred to the stud and thereby the top layer removal of the coating of the steel substrate by the stud is ensured. Furthermore, the receiving means may also be provided with magnetic means for keeping the stud in a predetermined position before the application. Hereby, the stud can be placed in a predetermined position in the receiving means of the stud welding gun and kept in this position before the action of attachment commences.

The invention is described in more detail in the following with reference to examples in the accompanying drawings, in which:
- fig. 1: is an illustration of a steel structure with a fibrous insulation mounted thereon,
- fig. 2: is a principal cross-section view of a steel girder with an insulation fitted around it,
- fig. 3: is a schematic illustration of the method of attaching a fibrous insulation panel according to the invention,
- fig. 4: is a perspective drawing of a stud according to a preferred embodiment according to the invention,
- fig. 5: is a cross-sectional side view of the stud shown in fig. 4,
- fig. 6: is a top view of a stud according to another embodiment,
- fig. 7: is a cross-sectional side view of a stud according to another embodiment of the invention,
- fig. 8: is a schematic detailed view of the stud as it engages the steel structure, and
- fig. 9: is a schematic illustration of another use of the invention for assembly of panels of a plurality of layers.

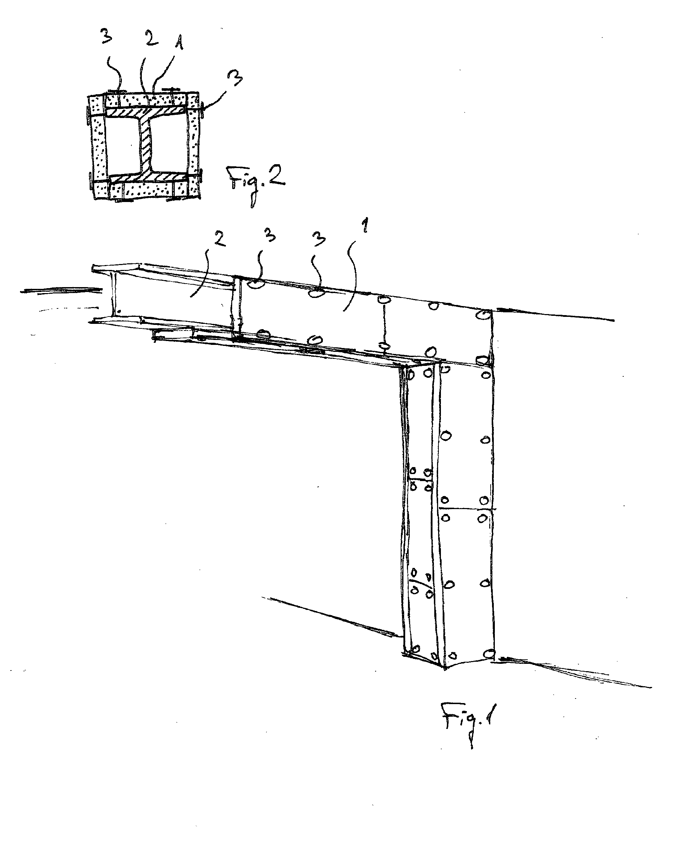

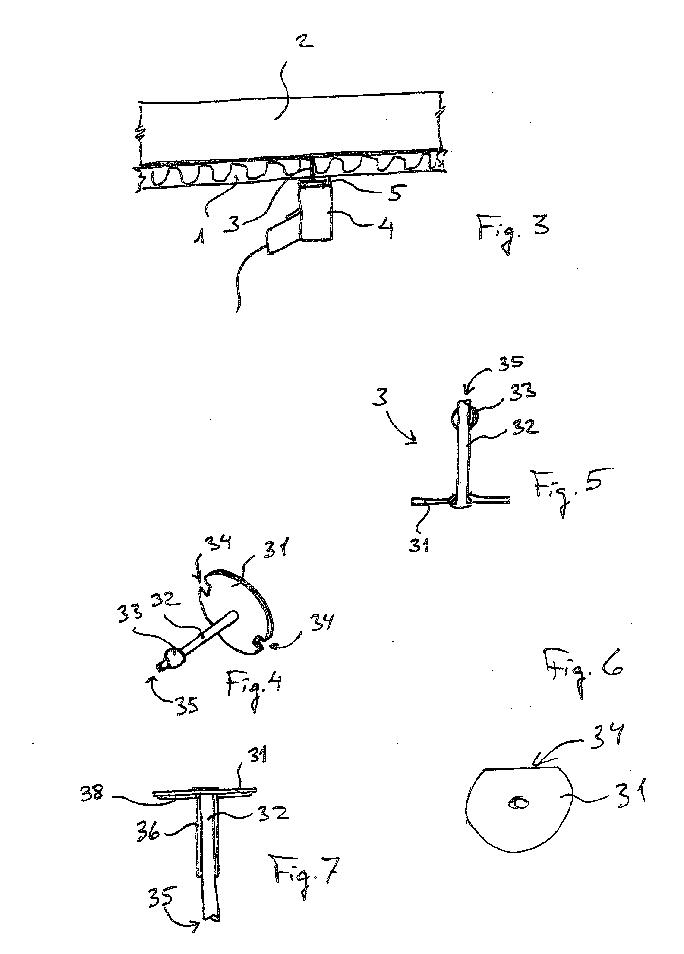

In figure 1 is shown a steel structure 2 with fire insulation 1. The insulation is typically made up of fibrous insulation panels 1, which are mounted on the steel girder structure side by side covering the entire surface of the steel structure. The fibrous insulation panels 1 are secured to the steel structure by studs 3, which are pinched through the insulation panel and brought in contact with the steel surface underneath, as shown in fig. 2 and welded onto the steel structure 2 by use of a stud welding gun 4 by an electric welding process (see fig. 3).

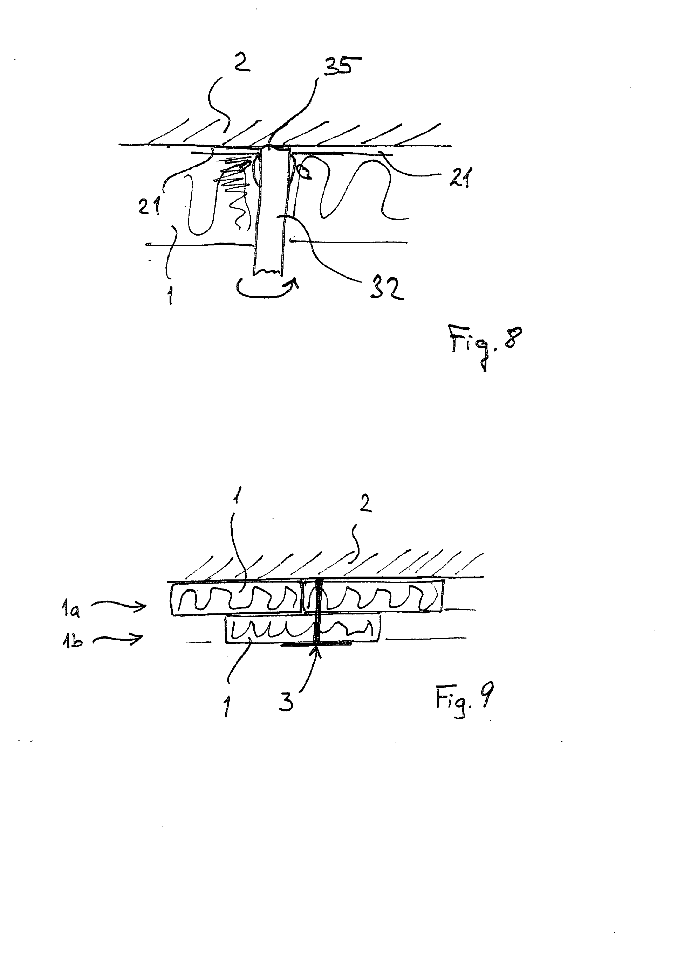

The welding gun 4 has a capacitor unit or a transformer unit (not shown). The capacitor unit is charged by a main voltage-supplied transformer (not shown). By using a capacitor welding process a sufficient high amount of energy may be applied to the stud in a short time (a fraction of a second) so that the stud is welded onto the metallic surface. The welding gun 4 is pressed against a stud 3, which is pressed through the insulation panel 1, as shown in fig. 3. The stud 3 is accommodated in a receiving head 5 of the welding gun 4. The welding gun 4 is placed over the stud 3 so that the receiving head 5 is fitted over the head 31 of the stud 3 (see fig. 4). By the aid of the receiving means 5 the stud 3 is biased towards the steel structure 2 and rotated and when the stud 3 is pressed and rotated sufficiently against the surface of the steel structure 2, the welding process is activated and the stud is welded onto the steel surface retaining the insulation panel 1 between the steel structure 2 and the head of the stud 3.

As shown in figures 4 and 5, the stud 3 consists of a preferably disc-shaped head 31 from which an elongated protruding pin member or stud pin 32 extends. The head 31 is provided with indentations 34 and the contour of the head 31 is designed to co-operate with the inner shape (non shown) of the receiving means 5 of the welding gun 4 to ensure that the an angular displacement of the receiving means 5 is transferred to the head 31 and thereby the stud 3. At the free end of the stud 3 opposite the head 31, a top layer removing means 35 is provided, preferably as a drilling-like cutting edges on the end surface of the pin 32. Adjacent the drilling head 35, a small deposit 33 of zinc or similar corrosion protective material may be provided. The amount of corrosion resistant deposit 33 is such that when the welding current is applied to the stud 3 as the welding process is activated, the deposit 33 distributes over the welding spot and (re-)establish a corrosion resistant coating.

As shown in fig. 6, the head may be provided with any non-rotary symmetric shape in order to ensure that it follows the rotation of the receiving means 5 of the welding gun 4. However, in the simplest solution according to the invention a frictional grip by the receiving means 5 on the stud may prove sufficient in some circumstances in order to provide the necessary rotation of the stud 3.

In fig. 7 another embodiment of the stud 3 according to the invention is shown. According to this embodiment, the pin 32 is provided with a sleeve 36 of plastic or similar non-conductive material extending substantially along the length of the pin between the tip 35 and the head 31. In addition to the sleeve 36 or as a substitute therefore, an isolating coating 38 of non-conductive material may be provided on the underside of the head 31. This prevents damaging an aluminium foil coated insulation panel from the electrical current of the welding gun as the welding energy is released during the welding process.

The tip 35 of the pin 32 is provided with a drill head, i.e. one or more cutting or scraping edges for removing a top layer 21 on the steel surface of the steel structure 2 which is engaged by a rotation of the stud 3, as shown in fig. 8.

Another utility of the invention is shown in fig. 9 where several layers 1a, 1b of panels 1 are attached to a steel structure 2 by one or more studs 3.

The above description relates to some of the preferable embodiments of the invention. However, it is realised that other embodiments of the various aspects of the invention may be provided without departing from the scope of the invention as set forth in the accompanying claims.

## Claims

1. A method of attaching one or more sheet panel onto a metal structure by placing a number of studs through the sheet material and welding said studs onto the metal structure by using a stud-welding system in which the stud is positioned in a stud-weldinggun**characterised in that**
the stud is rotated while substantially simultaneously being forced onto the metal structure before the discharge of the welding current.

2. A method according to claim 1, where said sheet material is a fibrous insulation sheet material.

3. A method according to claim 1 or 2, where the stud is forced onto the metal structure immediately before the discharge of the welding current.

4. A method according to any of the claims 1 to 3, where the metal structure is a steel structure.

5. A method according to any of the claims 1 to 3, where the metal structure is an aluminium structure.

6. A method according any of the claims 1 to 5, where the stud is rotated simultaneously with being biased towards the metal structure.

7. A method according any of the claims 1 to 6, where the metal structure is a coated structure, e.g. with a corrosion resistant coating.

8. A method according any of the claims 1 to 7, where a top layer, such as a coating, on the metal structure is distorted by the stud during its rotation.

9. A fibrous insulation layer comprising one or more fibrous panels mounted on a metal structure by stud welding using a method according to any of the preceding claims, wherein the insulation layer is made up by a number of panels independently secured by one or more studs to the metal structure.

10. A stud for use by attaching a sheet panel onto a metal structure comprising a head with a protruding pin member,
**characterised by**
said pin member being provided with top layer removing means at its free end.

11. A stud according to claim 10, wherein said top layer removing means is a drilling head formed in the pin end.

12. A stud according to claim 10 or 11, wherein said head is disc-shaped.

13. A stud according to any of the claims 10 to 12, wherein said head is provided with a non-rotary symmetric shape.

14. A stud according to any of the claims 10 to 13, wherein the head being provided with indexing means.

15. A stud according to any of the claims 10 to 14, wherein the pin is provided with a corrosion protective material deposit adjacent to the top layer removing means.

16. A stud according to claim 15, wherein the corrosion protective material is zinc.

17. A stud according to any of the claims 10 to 16, wherein the pin is provided with an electrically insulating sleeve.

18. A stud welding gun for welding on studs comprising
spring-loaded stud holding means for receiving a stud, which is pinched through a sheet panel, and biasing the stud towards an underlying metal structure,
**characterised by**
said stud receiving means are provided with rotating means for rotating the stud along its pin axis, when the stud is biased into contact with the metal structure.

19. A stud welding gun according to claim 18, wherein the receiving means are provided with an inner shape which is designed to co-operate with the non-symmetric shape of the head of the stud to be received therein.

20. A stud welding gun according to claim 19, wherein the receiving means are provided with magnetic means for keeping the stud in a predetermined position before the application.

21. A stud welding gun according to claim 15 or 16, wherein said inner shape of the receiving means is provided with protrusions corresponding to indentations on the head of the stud.
